Europäisches Patentamt

European Patent Office

Office européen des brevets

(19)

(11) Publication number: **0 176 186**
**A2**

(12) **EUROPEAN PATENT APPLICATION**

(21) Application number: **85305319.7**

(22) Date of filing: **25.07.85**

(51) Int. Cl.⁴: **A 47 J 36/02**
**B 65 D 81/34**

(30) Priority: **27.07.84 GB 8419232**

(43) Date of publication of application:
**02.04.86 Bulletin 86/14**

(84) Designated Contracting States:
**AT BE CH DE LI NL**

(71) Applicant: **Wieske, Theophil**
**Paul-Sorge-Strasse 62a**
**D-2000 Hamburg 61(DE)**

(71) Applicant: **Ruback, Wolf**
**Spiekeroogstrasse 30**
**D-4350 Recklinghausen(DE)**

(72) Inventor: **Wieske, Theophil**
**Paul-Sorge-Strasse 62a**
**D-2000 Hamburg 61(DE)**

(72) Inventor: **Ruback, Wolf**
**Spiekeroogstrasse 30**
**D-4350 Recklinghausen(DE)**

(54) Foil for frying.

(57) A foil for frying contains a carrier coated with a composition including fat, which may also contain an anti-spattering agent such as lecithin. The foil may comprise an aluminium sheet coated with a thermo plastic organic polymer resistant to melting at frying temperatures. The foil is in the form of a laminate with an inner aluminium foil layer sealed in layers of the plastic material. In use the foil is pre-cut to fit in a frying pan which is heated to fry food resting on the foil which is discarded after use.

EP 0 176 186 A2

Croydon Printing Company Ltd

## Foil for Frying

The present invention relates to a foil for frying and to a laminated film.

It is common practice to use fat for frying. The fat acts as a heat transfer medium and provides a hydrophobing effect on the material to be fried, e.g. potatoes, meat and eggs, thereby reducing the dehydration of the material. The fat also helps to reduce sticking of the material to the pan. The fat can for example be used in the form of margarine or liquid oil or as fat solid at room temperature. (In the following the indication "fat" includes any composition consisting essentially of triglycerides unless indicated otherwise). For deep frying usually a fat composition is used which has a very low water content. One of the problems encountered in shallow frying is the spattering which can occur upon inserting the material to be fried into the heated fat. This is especially the case when a fat composition is used which is also suitable for deep frying, e.g. liquid oil or fat solid at room temperature.

According to one aspect the present invention provides a foil for frying which contains a carrier coated with a composition which contains fat. As carrier can be used a sheet or foil of heat-resistant material. The foil can be used for shallow frying.

A foil for frying is known from German Gebrauchsmuster 8231687. The foil described in this publication consists of polytetrafluorethylene strengthened with a glass fabric. This foil is to be used for frying in the absence of fat.

Upon frying with such a foil in the absence of fat, 0176186
sealing of the material to be fried is usually not
achieved. Moreover, browning of the material is often
not homogeneously obtained.

In the composition with which the carrier is coated,
part or all of the triglyceride fat can be replaced by
compounds having properties which are functionally
similar to those of triglycerides. For example, higher
fatty acid esters of mono- and disaccharides, fatty
alkyl ether derivatives of glycerol, esters of fatty
alcohols and polycarbonic acids, waxes and
microcrystalline cellulose can be used for replacing
part or all of the triglyceride fat of the claimed
products. In this specification, the indication fat
includes therefore both triglycerides and fat replacers
as indicated above.

Preferably the composition with which the carrier is
coated comprises an anti-spattering agent. A suitable
anti-spattering agent is for example lecithin. Preferably the anti-spattering agent is an alcohol-soluble
fraction of lecithin. It is particularly preferred tha
the anti-spattering agent should contain partially
hydrolysed lecithin. For taste reasons it is further
preferred that the lecithin to be incorporated in the
composition is defatted lecithin.

The composition preferably comprises anti-spattering
agent in an amount of from 0.1 to 2% by weight, more
preferably from 0.2 to 1% by weight.

The composition with which the carrier is coated may
for example comprise layers of anti-spattering agent
and fat, obtained e.g. by first applying the anti-
spattering agent to the foil and subsequently applyin
a fat layer. Alternatively, the composition with which
the carrier is coated can for example be a mixture of

0176186

fat and anti-spattering agent, obtained by first mixing the ingredients and then applying this mixture to the carrier.

It is an advantage of the present invention that the spattering which normally occurs at shallow frying, can be reduced substantially. When using the frying foil, the spattering can be even less than would occur if the same amount and kind of fat were used as such instead of introducing it into the pan as a coating on a carrier.

It is another advantage that the fat uptake by the material which is being fried, can be less than it would normally be if no frying foil were used.

It can be advantageous to incorporate salt, sugar, protein or flavour or a combination of two or more thereof into the composition with which the carrier is coated. The amount and kind of such additives can be chosen in dependence on the material for which the frying foil is to be used. For example, different additives can be chosen for the frying of fish, eggs and meat.

Preferably the fat contained in the composition with which the carrier is coated has a steep solids line. The solids content of the fat as determined by NMR analysis is preferably at most 5%, more preferably at most 2.5% by weight at 35°C. The solids content at 25°C is preferably at least 25%, more preferably at least 30% by weight.

Suitable fats are for example cocoa butter, palm mid-fraction, i.e. palm oil from which both a high melting fraction and a low melting fraction have been removed, soybean oil hydrogenated to about 36°C and mixtures of

0176186

such hydrogenated soybean oil with partially hydrogenated sunflower oil. Also suitable is for example an interesterified mixture of soybean oil and substantially completely hydrogenated soybean oil. Another example of a suitable fat is a mixture containing palm oil, coconut oil and a low melting fraction of palm oil.

The composition with which the carrier is coated comprises preferably at least 90%, more preferably at least 95% by weight of fat. The thickness of the layer with which the carrier is coated, is not critical. If the carrier is coated on one side only, which is preferred, then the layer preferably has a thickness of from 0.2 to 2 mm, more preferably from 0.5 to 1.2 mm. If the carrier is coated on both sides, the coating on one side preferably has a thickness of about half the value indicated for a foil of which the carrier is coated on one side only.

To allow a smooth frying operation, the carrier of the foil preferably is substantially impermeable to water.

Another preferred feature which assists in allowing trouble-free frying is to use a carrier of which the average specific gravity is at least about 1 g/ml. More preferably the average specific gravity is at least 2 g/ml. A paper carrier for example is less suitable. The carrier preferably has a thickness of from about 10 to about 500 $\mu$m.

It is preferred to use a carrier of which the surface which is to be coated with the fat composition is roughened. This can facilitate the application of the fat composition onto the carrier.

According to another aspect, the present invention provides a laminated film which comprises a metal layer and a layer of polymer. Preferably the laminated film comprises a layer of polymer which is covered on both sides with a metal layer. Preferably the metal is aluminium. It is preferred to use a flexible polymer. It is particularly suitable to use a polymer which softens at a temperature above about 60 °C. A particularly preferred polymer is polyamide. Polyester can also suitably be used. The metal layer preferably has a thickness of from 8 to 30 $\mu$m. The layer of polymer is preferably from 10 to 60 $\mu$m thick.

The laminated film can be eminently suitable for application as carrier in the foil for frying. For example, a foil comprising a carrier consisting of a polyamide-6.6 layer of 20 $\mu$m thick, covered on both sides with an aluminium layer of 12 $\mu$m thick, the outer surface of one of the aluminium layers being roughened and coated with a fat-containing composition, can have various favourable properties when used for frying. The foil having a size and shape approximately corresponding to the inner bottom of the pan is put into the pan with the fat-containing composition on the upper side. After pre-heating, the material to be fried, e.g. the meat, is put on the foil. As the carrier is impermeable to water, the polyamide softens upon heating and the average specific gravity of the carrier is sufficiently high, the carrier fits smoothly to the bottom of the pan during the frying. The heat transfer is good and the meat does not stick badly to the foil. By choosing a suitable fat-containing composition, the frying operation can be further improved. The foil is disposed of after use and the cleaning of the pan is usually far easier than after frying without the foil. The reduced spattering further lowers the necessary cleaning of furnace and pan and also reduces the risk of injuries caused by the spattering of the hot fat.

Another advantage of the frying foil is that often less fat needs to be used than is commonly done. For example, the amount of fat used in a common frying pan is often larger than necessary for the frying itself and serves to reduce the sticking of the material to the pan. This sticking usually gets worse when the pan has been used more often. With the frying foil this problem does not occur. Thus, whereas the use of the frying foil can already reduce the fat uptake by the fried material, the fat uptake can be lowered further by the use of less fat with the frying foil without affecting the convenience of the frying operation. An additional advantage of using less fat is that it can further reduce the spattering. The spattered amount normally increases more than proportionally with the amount of fat in the pan.

In the following Examples the amount of spattering is determined as follows :

A horizontal aluminium foil is placed between the pan and an electric heating plate and extends at least 30 cm in all directions outside the area covered by the pan. A second aluminium foil of the same size is positioned horizontally at a distance of 15 cm above the bottom of the pan. The spattered amount is determined by measuring the weight difference of the foils before and after the frying operation.

The fat uptake by the fried material is determined from the difference in weight, before and after frying, of the pan with the fat or the foil for frying and the aluminum foils (for the determination of the spattered amount).

The loss of weight of the material during the frying operation is determined from the weight difference before and after the frying.

In the Examples, unless indicated otherwise, a pork steak was fried with a foil having a diameter of 15 cm and comprising a carrier consisting of a 20 $\mu$m thick layer of polyamide 6.6 coated on both sides with an aluminium layer of 12 $\mu$m thickness. The surface of one of the aluminium layers was roughened with sanding paper and evenly coated with 12 g of a fat containing composition. The thickness of the layer of the fat containing composition was about 0.75 mm. The steak was fried in a pan having an inner diameter of 15 cm.

To reduce the scatter in the experimental results, due mainly to the varying properties of the material to be fried, all experiments were carried out 5 times. The results given in the examples are the average results of the 5 trials.

Example 1

A steak was fried as indicated above using a composition containing 99.7% fat and 0.3% anti-spattering agent.

The fat used was a fat blend comprising:
40% soyabean oil
10% soyabean oil hydrogenated to a melting point of 28°C
30% palm oil
10% palm oil hydrogenated to a melting point of 42°C
10% of an interesterified mixture consisting of
   - 60% fully hydrogenated coconut oil
   - 30% fully hydrogenated soyabean oil
   - 10% soyabean oil hydrogenated to a melting point of 36°C.

0176186

As anti-spattering agent transparent enzymatically hydrolyzed soyabean lecithin was used.

For comparison the experiment was repeated without the foil for frying, using the same amount (12 g) of the same fat blend but without anti-spattering agent.

The temperature of the fat during the frying was 210°C.

The results are given in Table I.

Table 1

|  | with foil | | without foil | |
|---|---|---|---|---|
| weight of steak | 138 | g | 140 | g |
| loss of weight during frying | 9 | % | 20 | % |
| fat uptake by meat | 0.7 g | | 1.8 g | |
| spattered amount | 0.4 g | | 2.8 g | |

When the frying foil was used, the meat was less sticking to the surface and the pan was much easier to clean than without the foil. No difference was observed regarding the browning of the meat whether or not the foil was used. (Any amount of fat spattering which is larger than 0.5 g is perceived as highly undesirable; amounts of 0.4 g or lower become increasingly more acceptable).

The experiment was repeated using eggs instead of steaks. The spattering in the frying operation was substantially less when using the foil than without the foil.

Example 2

Steaks were fried at 200°C using foils coated with 10 g

0176186

of a fat composition containing 99.5% of the fat blend of Example 1 and 0.5% of anti-spattering agent. The following anti-spattering agents were used:

A: commercial native soyabean lecithin
B: enzymatically hydrolyzed soyabean lecithin
C: alcohol soluble fraction of soybean lecithin
D: desugared alcohol soluble fraction of soyabean lecithin

The results are shown in Table 2

Table 2

| anti-spattering agent | weight of steak (g) | spattered amount (g) |
|---|---|---|
| A | 157 | 0.27 |
| B | 155 | 0.09 |
| C | 152 | 0.08 |
| D | 149 | 0.03 |

Example 3

Steaks were fried at 200°C and at 160°C using foils coated with a composition containing the fatblend of Example 1 and varying amounts of anti-spattering agent. As anti-spattering agent fractionated soyabean lecithin containing more than 80% by weight of phospatidyl choline was used.

The results of the experiments are shown in Table 3.

Table 3

| amount of anti-spattering agent (%) | temp. (°C) | weight of steak (g) | spattered amount (g) |
|---|---|---|---|
| 0 | 200 | 154 | 0.82 |
| 0.1 | 200 | 140 | 0.40 |
| 0.25 | 200 | 156 | 0.13 |
| 0.5 | 200 | 149 | 0.07 |
| 1.0 | 200 | 134 | 0.02 |
| 0.1 | 160 | 155 | 0.13 |
| 0.25 | 160 | 151 | 0.05 |
| 0.5 | 160 | 160 | 0.02 |

## Example 4

Steaks were fried at 200°C using foils coated with

compositions containing 99.7% of a fatblend and 0.3% of
the anti-spattering agent of Example 1.

The following fatblends were used:

A. Fatblend according to Example 1.

B. Palm oil of which the highest and the lowest melting
   fraction were removed by fractionation.

C. A mixture comprising 80% by weight of soyabean oil
   hydrogenated to a melting point of 36°C and 20% by
   weight of sunflower oil hydrogenated to a melting
   point of 32°C.

D. A mixture comprising 10% by weight of rapeseed oil,
   45% by weight of hydrogenated rapeseed oil and 45%
   by weight of hydrogenated fish oil.

Measurement of the solids content gave the following
results:

0176186

| Fatblend | Solids content (%) | |
|----------|----------|----------|
| | 25°C | 35°C |
| A | 12 | 2 |
| B | 60 | 3 |
| C | 39 | 4 |
| D | 28 | 8 |

No significant differences were observed in the frying operation between the various fatblends. The foil with fatblend A, however, was less convenient to use because it caused fatty fingers when handling it. The steak fried with the foil coated with blend D lost its appetizing appearance more quickly than those fried with the other foils at cooling down after the frying.

Example 5

Steaks were fried at 200°C using foils coated with a composition comprising 0.25% by weight of egg-lecithin and 99.75% by weight of a fatblend consisting of 80% by weight of soybean oil hydrogenated to a melting point of 36°C and 20% by weight of hydrogenated sunflower oil, melting point 32°C. The foils were prepared with the following support materials:

a] cotton cloth
b] filter paper
c] grease proof paper
d] polyamide 6.6 foil
e] aluminum foil
f] Alu-PA-Alu foil as used in the previous examples without roughened surface
g] Alu-PA-Alu foil with roughened surface.

Carriers a, b and c, having specific weights lower than that of fat, had a tendency to lift up from the pan

0176186

bottom and were less convenient to use. With carriers a and b, being able to absorb water and being permeable to water, the spattering was very low but the meat got stuck to the carrier rather badly. With these carriers, steam bubbles were formed underneath the foil. Carrier d softened upon heating and fitted very well to the pan bottom. With carrier e the spattering was somewhat less than with carrier d, but the carrier got folded rather easily when handling the meat. When that had happened, the carrier did no longer fit smoothly to the pan bottom which had a negative influence on the heat transfer. The best overall results were obtained with carriers f and g in the frying operations. They did not have the disadvantages of carriers a - c. These carriers fit the pan bottom smoothly during the frying and the spattering was equally low as with carrier e. They did not easily get folded in normal handling and if they were folded deliberately, proper heat transfer could be restored better by unfolding than in the case of carrier e. Carrier g had the advantage over carrier

f that it was more easy to apply the fat composition to the roughened surface of carrier g.

Example 6

Steaks were fried with a frying foil as described in Example 1, but in the fat composition 0.1% NaCl was included. This improved the taste of the fried meat. Similarly 1% non-fat milk solids were included, which resulted in increased browning of the meat and of the gravy prepared after frying the meat.

Example 7

Steaks were fried at 200°C with foils coated with a composition containing 0.3% by weight of alcohol soluble soyabean lecithin and 99.7% of fractionated palm oil of which both the highest and the lowest melting fractions had been removed. The carriers were coated with 5, 12, 25 and 40 g of the fat composition giving layers with thicknesses of about 0.3, 0.75, 1.6 and 2.5 mm respectively. The spattering increased substantially with increasing amounts of fat, the spattering being rather severe with the foil containing 40 g of the fat composition. The meat being fried with the foil containing 5 g fat browned less quickly than the other steaks. The loss of weight during frying with the foil with 5 g fat was also somewhat higher than in the other cases. The overall results were most satisfactory with the foil containing 12 g fat.

CLAIMS

1. Foil for frying containing a carrier coated with a composition which contains fat.

2. Foil according to Claim 1, wherein the composition comprises an anti-spattering agent.

3. Foil according to Claim 2, wherein the anti-spattering agent contains lecithin.

4. Foil according to Claim 3, wherein the anti-spattering agent is an alcohol-soluble fraction of lecithin.

5. Foil according to Claim 3 or 4, wherein the anti-spattering agent contains partially hydrolyzed lecithin.

6. Foil according to any one of the Claims 1 to 5, wherein the composition comprises from 0.1 to 2% by weight of anti-spattering agent.

7. Foil according to Claim 6, wherein the composition comprises from 0.2 to 1% by weight of anti-spattering agent.

8. Foil according to any one of Claims 1 to 7, wherein the composition comprises salt, sugar, protein or flavour or a combination of two or more thereof.

9. Foil according to any one of Claims 1 to 8, wherein the fat has a solids content of at most 5%, preferably at most 2.5% by weight, at 35 °C.

10. Fat according to any one of Claims 1 to 9, wherein the fat has a solids content of at least 25%, preferably at least 30% by weight at 25 °C.

11. Foil according to any one of Claims 1 to 10, wherein the composition comprises at least 90%, preferably at least 95% by weight of fat.

12. Foil according to any one of Claims 1 to 11, wherein the carrier is coated with a layer having a thickness of from 0.2 to 2 mm, preferably from 0.5 to 1.2 mm.

13. Foil according to any one of Claims 1 to 12, wherein the carrier is substantially impermeable to water.

14. Foil according to any one of Claims 1 to 13, wherein the surface of the carrier which is coated, is rough.

15. Foil according to any one of Claims 1 to 14, wherein the carrier has a thickness of from 10 to 500 /um.

16. Foil according to any one of Claims 1 to 15, wherein the carrier comprises aluminium.

17. Foil according to Claim 16, wherein the carrier comprises a layer consisting essentially of aluminium.

18. Foil according to any one of Claims 1 to 17, wherein the average specific gravity of the carrier is at least 1, preferably at least 2 g/ml.

19. Laminated film consisting of a metal layer and a layer consisting of polymer.

20. Laminated film according to Claim 19 comprising a layer of polymer covered on both sides with a metal layer.

21. Laminated film according to Claim 19 or 20, wherein the metal is aluminium.

22. Laminated film according to any one of Claims 19 to 21, wherein the polymer is a flexible polymer.

23. Laminated film according to any one of Claims 19 to 22, wherein the polymer is a polymer which softens at a temperature above about 60°C.

24. Laminated film according to any one of Claims 19 to 23, wherein the polymer is polyamide or polyester.

25. Laminated film according to anyone of Claims 19 to 24, wherein the metal layer has a thickness of from 8 to 30 /um.

26. Laminated film according to any one of Claims 19 to 25, wherein the layer of polymer has a thickness of from 10 to 60 /um.

27. Foil according to any one of Claims 1 to 18, wherein the carrier is a laminated film according to any one of Claims 19 to 26.

28. Laminated film substantially as hereinbefore described.

29. Foil for frying substantially as hereinbefore described.

30. Process for the frying of material wherein a foil according to any one of claims 1 to 18, 27 and 29 is used.